# EUROPEAN PATENT APPLICATION

(11) **EP 2 495 522 A1**
(43) Date of publication of application: **05.09.2012**
(21) Application number: 10758756.0
(22) Date of filing: 30.03.2010
(51) Int. Cl.: G01B 9/02, G01B 11/00, G01B 11/24

(54) **INTERFEROMETER**

(30) Priority: 30.03.2009 JP 2009080747
(71) Applicant: National University Corporation Nagaoka University, Nagaoka-shi, Niigata 940-2188 (JP)
(72) Inventor: SHIODA, Tatsutoshi, Niigata 9402188 (JP)
(74) Representative: Gulde Hengelhaupt Ziebig & Schneider
(86) International application number: PCT/JP2010/055771
(87) International publication number: WO 2010/113985

(57) **Abstract**

The light from the light source of the broadband light is reflected by VIPA so that reflection distance changes step by step. In VIPA, the light that phase changed is generated depending on the depth of the step. Interference profile is measured by this reflected light and optical path length modulator by synthetic light with the generated light frequency comb. The interferometer does not have a movable scanning mechanism, and the operation of the Fourier transform is unnecessary.
Thus, it has the measurement of the short time. Also, measurement of the measurement of the coaxial tomography and the one-dimensional dislocation of the depth direction is possible. The measurement of the two-dimensional dislocation of the depth direction is possible.

## Description

### FIELD OF THE INVENTION

The present invention relates to a interferometer which it is suitable for a profile measurement, and it does not have a movable scanning mechanism and does not calculate Fourier transforms. More particularly, the present invention relates to a interferometer which can measure an one-dimension dislocation of a depth direction or a two-dimension dislocation of depth direction using a light source of broadband light ( white light, super continuum light, etc.) and an optical path length modulator ( a spectroscope for generating a light frequency comb may be provided in before or after the optical path length modulator), wherein, the optical path length modulator can generate a modulated light which light path length changed into depending on an one-dimensional position on section that is perpendicular to spread direction.

### BACKGROUND ART

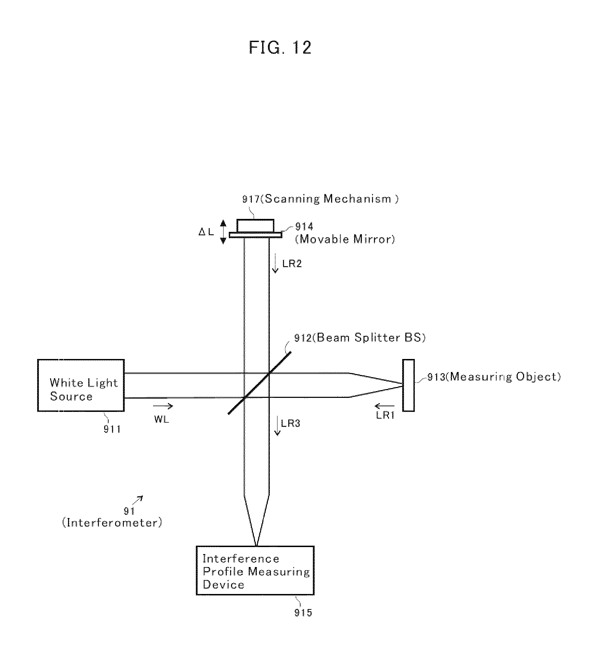

For example, a distance measuring equipment (an interferometer) of Michelson type is used to measure surface shape of an object or internal structure of a light transmission object (cf. non-patent document 1). As the distance measuring device of Michelson type, the device using a white light source is known as shown in FIG. 12. In the distance measuring equipment 91 of FIG. 12, a white light WL from the white light source 911 transmits the beam splitter 912. The white light WL is emitted to the measuring object 913. On the other hand, the white light WL from the white light source 911 is reflected by the beam splitter 912. The white light WL reflected is emitted to the movable mirror 914.

The reflected light LR1 of the measuring object 913 is reflected by beam splitter 912, and the reflected light LR2 of the movable mirror 914 transmits beam splitter 912. Two reflected light LR1, LR2 are synthesized.
The synthetic light (LR3) is entered into the interference profile measuring instrument 915. The interference profile measuring instrument 915 measures the interference profile of the white light.

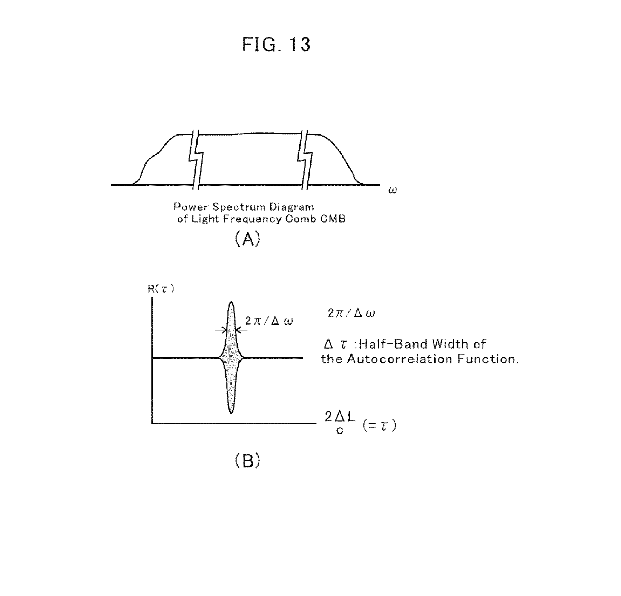

In FIG. 12, the scanning mechanism 917 moves the movable mirror 914 ( scanning mechanism 917 scans distance). When the distance from the measuring object 913 to the interference profile measuring instrument 915 and the distance from the movable mirror 914 to the interference profile measuring instrument 915 are equal, interference produces. This interference depends on the inverse Fourier transform of the power spectrum of the white light WL that is emitted from the white light source 911 shown in FIG. 13 (A).

As shown in FIG. 13 (B), the width of the interference wave form is inversely proportional to a bandwidth (Δ ω in FIG. 13 (B)) of the white light source 911. Thus, the resolving power rises when the white light source 911 is used. The synthesized light (LR3) is an auto-correlation function of the white light source 911 which assumed the scanning distance (ΔL) of the movable mirror 914 a variable.
2Π/Δω is half-band width of the auto-correlation functions in FIG. 13 (B).

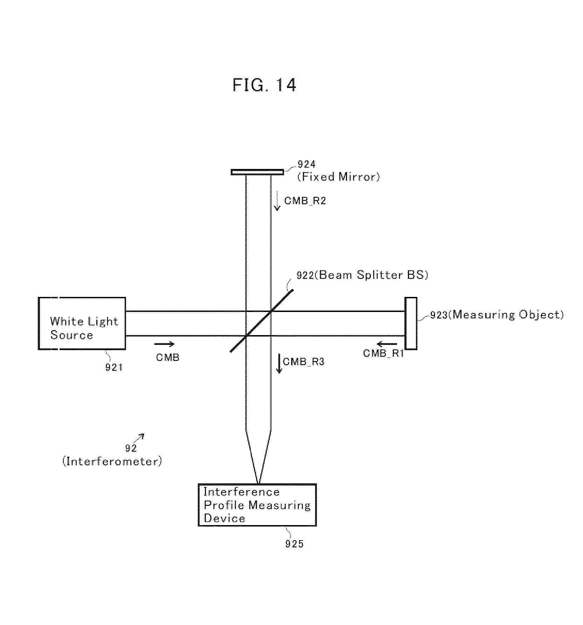

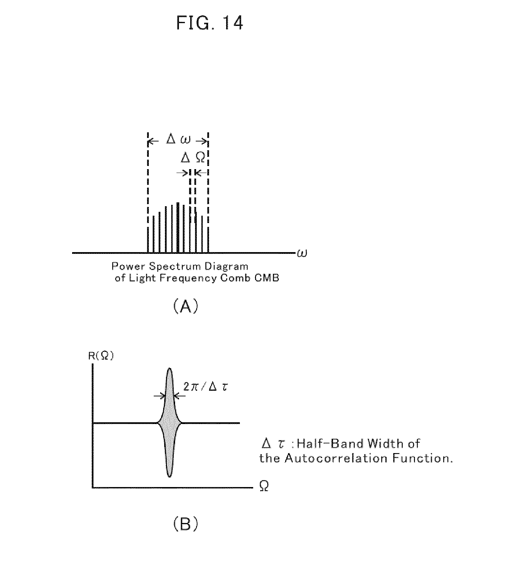

Also, a distance measuring device using the light frequency comb source 921 is known as shown in FIG. 14, too. In the distance measuring equipment 92 of FIG. 14, the fixed mirror 924 is used replacing with the movable mirror 914 of FIG. 12. In the distance measuring equipment 92 of FIG. 14, the interference profile measuring instrument 925 is used replacing with the interference profile measuring instrument 915 for the white light. The interference profile measuring instrument 925 measures the interference profile of the light frequency comb. The beam splitter 922 is the basically same as beam splitter 912 of FIG. 12. The propagation optical path of the light frequency comb CMB that light frequency comb source 921 emits is the same as propagation optical path length in FIG. 12. In FIG. 14, the reflected light frequency comb from the measuring object 923 is shown as CMB_R1, and the reflected light frequency comb from the fixed mirror 924 is shown as CMB_R2, and these synthesized light is shown as CMB _ R3.

The fixed mirror 924 of the distance measuring equipment 92 cannot move. Thus, the scan by moving a mirror is not carried out. However, on the other hand, the light frequency comb CMB shown in FIG. 15 (A) is scanned by a comb teeth interval ΔΩ. The interference profile measuring instrument 925 can measure interference profiles to occur then in the resolving power that responded to number of the teeth of comb. As shown in FIG. 15 (B), the width of the interference wave form is inversely proportional to a bandwidth (2π/Δτ in FIG. 15 (B)) of the light frequency comb CMB. Δτ is half-band width of the autocorrelation function.
[prior art documents]
[non-patent document]
[non-patent document 1]
Op.Ltt.25 (2) 111 (the detached room measuring equipment using the white light source)

### SUMMARY OF THE INVENTION

### PROBLEM TO BE SOLVED BY THE INVENTION

In the distance measuring equipment 91 shown in FIG. 12, high resolving power can be obtained to use white light. However, long time is needed for measurement because movement of the movable mirror 914 is necessary. Also a device upsizes because a movable mechanism is necessary. Even more particularly, in distance measuring equipment 92 shown in FIG. 12, mechanical maintenance is necessary, and production cost becomes higher.

Note that the distance measuring device using the fixed mirror is known replacing with the movable mirror 914 in FIG. 12 conventionally. In this distance measuring device, the diffraction grating is comprised just before the interference profile measuring instrument 915. However, in this distance measuring equipment, long time is needed for the arithmetic processing (Fourier transforms) of data in the interference profile measuring instrument 915.

In the distance measuring equipment 92 shown in FIG. 14, because the fixed mirror 924 is not scanned a movable scanning mechanism is unnecessary, and the maintenance of the movable scanning mechanism is unnecessary too. However, in the distance measuring equipment 92, the light frequency comb source 921 is scanned at frequency. Thus, the measurement time becomes longer, and high resolution such as the measuring device of FIG. 12 cannot be obtained.

The object of the present invention is to provide the interferometer that there is not a movable scanning mechanism and the high-resolution measurement is possible.
In the present invention, a light source to generate predetermined band light (including broadband lights such as the white light) is used. In the present invention, because the arithmetic for Fourier transforms is not made, the measurement in the short time is possible.

The object of the present invention is to provide an interferometer suitable for the measurement of the one-dimensional dislocation of the depth direction or the two-dimensional dislocation of the depth direction. In the present invention, an optical path length modulator is used. This optical path length modulator generates the modulated light which an optical path length changed into depending on the one-dimensional position on the section that is perpendicular to the propagation direction. Before or after the optical path length modulator, the spectroscope for light frequency comb outbreak can be provided.

### MEANS TO SOLVE THE PROBLEM

A thing of an interferometer of the present invention assumes (1) -(6) subject matter. (1)
Interferometer comprises,
a light source generating a broadband light,
a light path length modulator generating the modulated light that optical path length changes depending on a one-dimensional position on cross-section which is perpendicular to the propagation direction,
an optical system which emits to a measuring object broadband light generated by the light source and generates the reflected light, and,
an one-dimensional photo detector which receives the modulated light and the reflected light.

(2)
An interferometer according to (1), wherein the optical path length modulator is comprised so that reflection distance changes step by step depending on a one-dimensional position on beam cross-section, and the above light path length changes,

(3)
An interferometer according to (2), further comprising,
a spectrum device which receive broadband light and generates a light frequency comb,
a phase shift mirror which changes the light path length of the light frequency comb depending on the depth of the step because the surface is constructed like stairs.
As a spectrum device, VIPA (Virtually Imaged Phased Array) or a resonator can be used.

(4)
Interferometer comprises,
a light source generating a broadband light,
a light path length modulator generating the modulated light that optical path length changes depending on a one-dimensional position on cross-section which is perpendicular to the propagation direction,
an optical system which emits to a measuring object broadband light generated by the light source and generates the reflected light, and,
an two-dimensional photo detector which receives the modulated light and the reflected light.

(5)
An interferometer according to (4), wherein the optical path length modulator is comprised so that reflection distance changes step by step depending on a one-dimensional position on the beam cross-section, and the above light path length changes,

(6)
An interferometer according to (5), further comprising a spectrum device which receive broadband light and generates a light frequency comb,
a phase shift mirror which changes the light path length of the light frequency comb depending on the depth of the step because the surface is constructed like stairs.

### EFFECT OF THE INVENTION

In an interferometer of the present invention, a light source to generate predetermined band light (including broadband lights such as the white light) can be used. Also, an interferometer of the present invention can be comprised not to have a movable scanning mechanism. Because the operation such as Fourier transforms is not required in the interferometer of the present invention, the measurement of the short time and the high-resolution measurement are enabled.

In the interferometer of the present invention, the measurement of the coaxial tomography is possible. Also, in the interferometer of the present invention, the measurement of the one-dimensional dislocation of the depth direction or the two dimensions dislocation of the depth direction is possible. In the interferometer of the present invention, the predetermined band light (including broadband lights such as white light, the super continuum light) can be separated spatially as light frequency comb depending on frequency. And the phase of the light frequency comb separated spatially can be shifted, respectively. The distance measurement (the measurement of long distance) when distance to measuring object is long is thereby enabled. The interference light that is necessary for the measurement can be obtained by using generated light frequency comb using a spectrum device. The optical path length of the light to transmit through an optical path length modulator may be different from optical path length of the light through the measuring object (the optical path length of the incident light and the the optical path length of the reflected light may be different).
However, there is the optical path length difference within the coherence length of each mode comprising light frequency comb.

### BRIEF DESCRIPTION OF DRAWINGS

[FIG. 1]

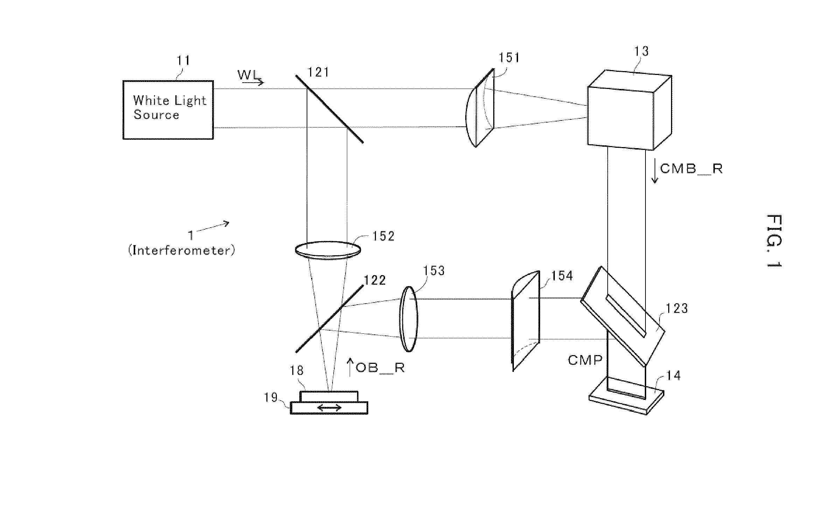

   FIG. 1 is explanatory drawing of the first embodiment of the interferometer (a Mach-Zehnder type) of the present invention having VIPA built-in to an optical path length modulator. By this interferometer, the distance to the surface point and the one-dimensional coaxial tomography of the depth direction can be measured.
[FIG. 2]

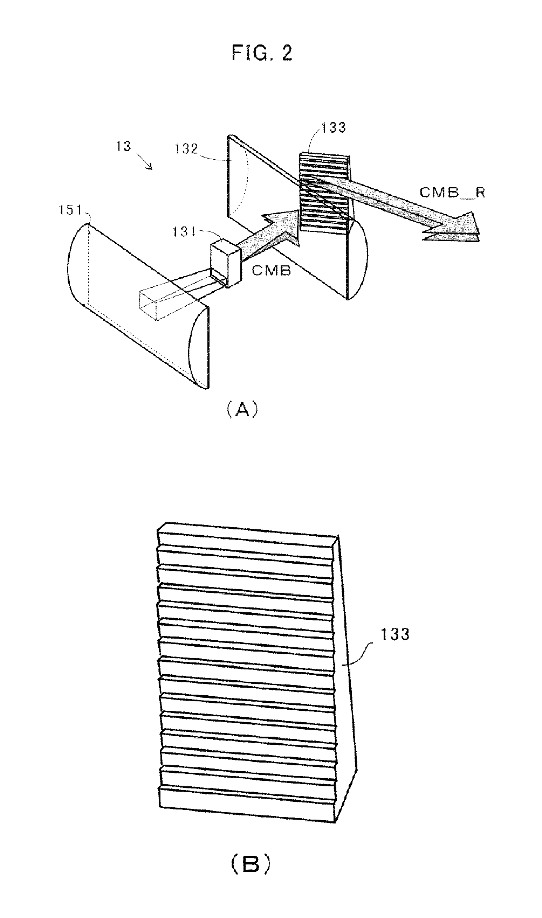

   FIG. 2 (A) is a figure showing an optical path length modulator used in an interferometer of FIG. 1, and FIG. 2(B) is a figure showing an example of the phase shift mirror.
[FIG. 3]

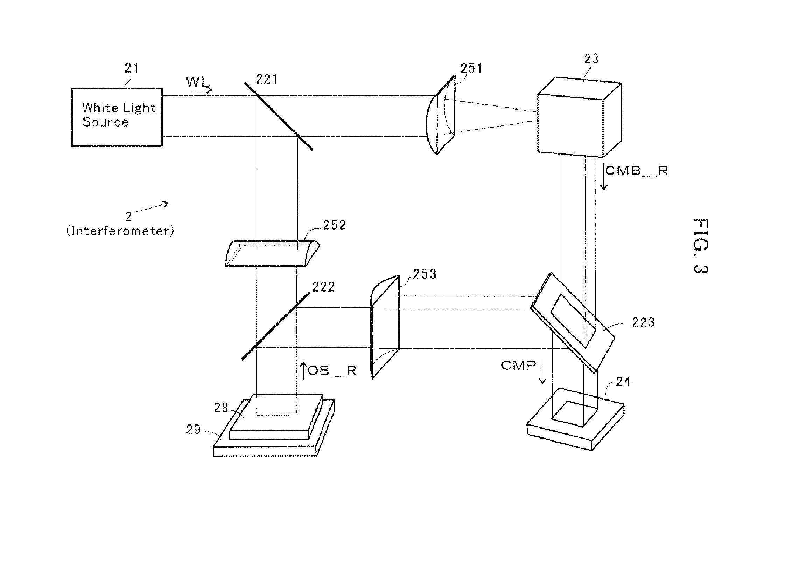

   FIG. 3 is explanatory drawing of the second embodiment of the interferometer (a Mach-Zehnder type) of the present invention having VIPA built-in to an optical path length modulator. By this interferometer, the distance to the point on the surface line and the two-dimensional coaxial tomography of the depth direction can be measured (surface measurement (two-dimensional measurement) can do distance in the depth direction).
[FIG. 4]

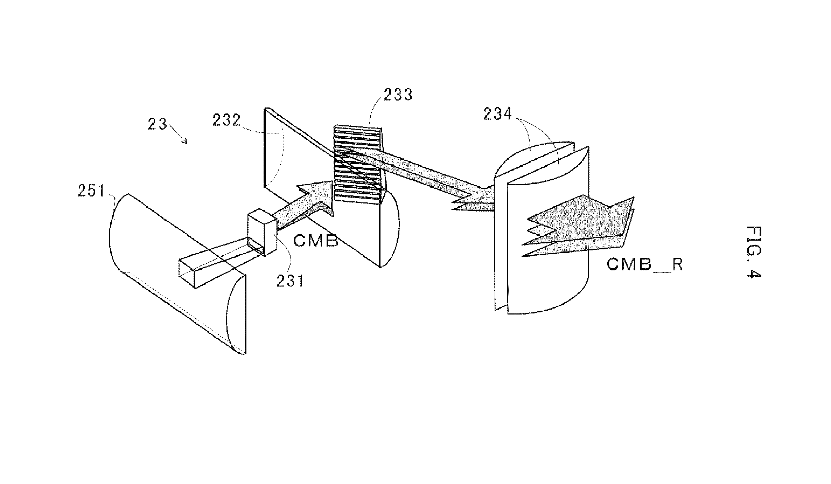

   FIG.4 is a figure which shows an optical path length modulator used in an interferometer of FIG. 3.
[FIG. 5]

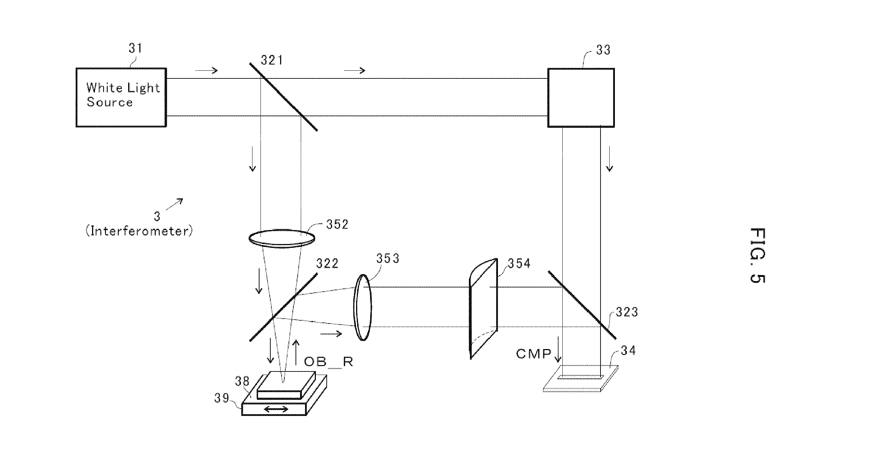

   FIG. 5 is an illustration of the third embodiment of the interferometer (a Mach-Zehnder type) of the present invention to measure the distance to the surface point and the one dimension coaxial tomography of the depth direction without using VIPA.
[FIG. 6]
   FIG.6 is a figure which shows an optical path length modulator used in an interferometer of FIG. 5.
FIG. 7 is an illustration of the fourth embodiment of the interferometer (a Mach-Zehnder type) of the present invention to measure the distance to the point on the surface line and the two dimensions coaxial tomography of the depth direction without using VIPA.
[FIG. 8]

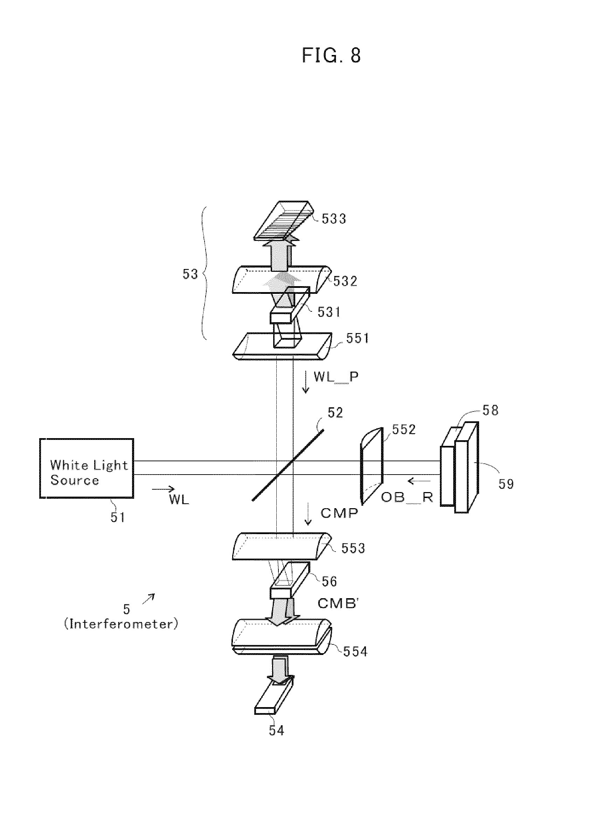

   FIG. 8 is an illustration of the fifth embodiment of the interferometers (a Michelson type) of the present invention to measure the distance to the surface point and the one dimension coaxial tomography of the depth direction with VIPA built-in to an optical path length modulator.
[FIG. 9]

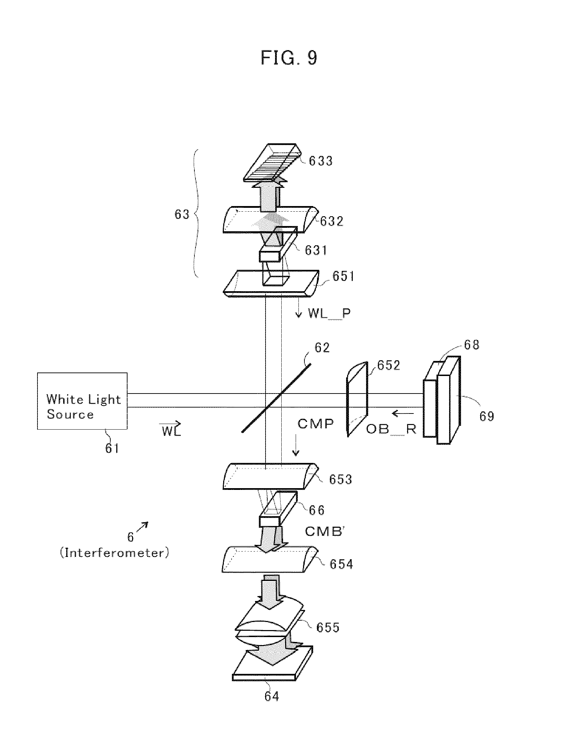

   FIG. 9 is an illustration of the sixth embodiment of the interferometers (a Michelson type) of the present invention to measure the distance to the point on the surface line and the two dimensions coaxial tomography of the depth direction with VIPA built-in to an optical path length modulator.
[FIG. 10]

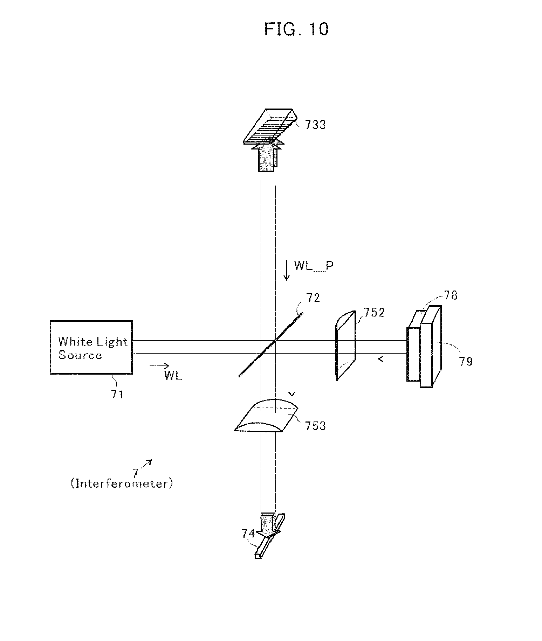

   FIG. 10 is an illustration of the seventh embodiment of the interferometers (a Michelson type) of the present invention to measure the distance to the surface point and the one dimension coaxial tomography of the depth direction without using VIPA.
[FIG. 11]

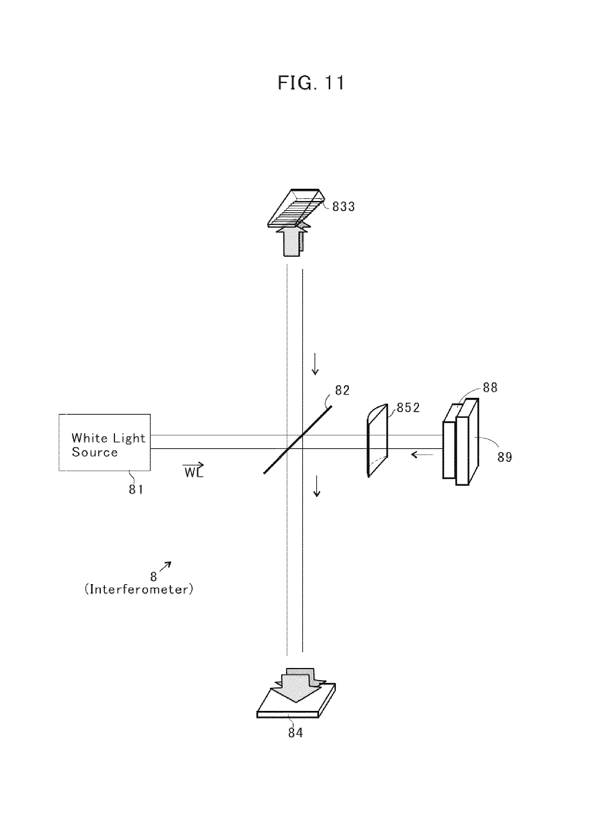

   FIG. 11 is an illustration of the eighth embodiment of the interferometers (a Michelson type) of the present invention to measure the distance to the surface point and the one dimension coaxial tomography of the depth direction without using VIPA.
[FIG. 12]
   FIG. 12 is a figure showing the distance measuring equipment of the conventional Michelson type using the white light source.
[FIG. 13]
   As for FIG. 13 (A), figure showing the power spectrum of the light source in the interferometer of FIG. 12, (B) are figures showing the interference wave pattern.
[FIG. 14]
   FIG.14 is a figure which shows distance measuring equipment using the conventional light frequency comb source.
[FIG. 15]
   FIG. 15 (A) is a figure showing the modes of the comb when light frequency comb is scanned in comb teeth interval. FIG. 15 (B) is width of the interference wave form and a figure showing the relationships between bandwidth of the light frequency comb. [mode for carrying out invention]

FIG. 1 is an explanatory drawing of the first embodiment of an interferometer of the present invention. The distance from a certain point to a surface point and an one dimension coaxial tomography of the depth direction can be measured by using an interferometer (Mach-Zehnder type) of FIG. 1.

The interferometer 1 comprises the white light source 11, the beam splitter ((BS) 121,122,123), the optical path length modulator 13, the interference profile measuring instrument 14 and the lens system (151,152,153,154) in FIG. 1.
For convenience, the lens system (the lens system to be described below is included) in the present specification is expressed simply.
Thus, the lens system does not need to accord with a lens system in the design.
The optical path length modulator 13 is comprised of the spectrum device 131, the cylindrical lens 132, the phase shift mirror 133 as shown in FIG. 2 (A).
The broadband light (here white light WL) from the white light source 11 is entered into the optical path length modulator 13 through the beam splitter 121 and the lens system 151 (cylindrical lenses). And optical path length modulator 13 generates light frequency comb CMB separated spatially depending on frequency.

The Spectrum device 131 is VIPA (Virtually Imaged Phased Array). VIPA can separate spatially teeth (comb teeth) of the different frequency.

As shown in FIG. 2 (B) the phase shift mirror 133 is a mirror constructed in the shape of stairs. The phase shift mirror 133 receives light frequency comb CMB, and it is reflected.
A reflection distance of the component (tooth) changes depending on frequency in the light frequency comb CMB step by step. The phase shift mirror 133 can generate the light frequency comb CMB_ R(teeth) which phase shifts depending on reflection distance. Teeth of CMB _ R are irradiated to beam splitter 123.

On the other hand, the white light WL from the white light source 11 is irradiated the measuring object 18 with through the beam splitter 121, the lens system 152 (cylindrical lenses), and the beam splitter 122. And the reflected light (a scattered light) OB_R of measuring object 18 is irradiated to the beam splitter 123 through the beam splitter 122, the lens system 153 (cylindrical lenses) and the lens system 154 (cylindrical lenses).

In FIG. 1, the measuring object 18 is carried to the moving stage 19.
The measuring object 18 can move with the flexibility of 1-axis or the flexibility of 2-axes horizontally. The beam splitter 123 synthesizes the light frequency comb (reflected light of phase shift mirror 133) CMB_R and reflected light OB_R. The light frequency comb CMB_R is emitted from the optical path length modulator 13, and the reflected light OB_R is reflected by the measuring object 18. The synthesized light is emitted to the interference profile measuring instrument 14 as synthesized light CMP. The interference profile measuring instrument 14 is an one-dimensional image sensor in the present embodiment. The one-dimensional image sensor receives synthesized light CMP, and interference profile p (x) is measured.

FIG. 3 is an illustration of the second embodiment of the interferometer of the present invention which can measure distance two dimensions in the depth direction. In the interferometer (a Mach-Zehnder type) of FIG. 3, the two-dimensional coaxial tomography of the depth direction can be measured.

The interferometer 2 comprises the white light source 21, the beam splitter 221,222,223, the optical path length modulator 23, the interference profile measuring instrument 24 and the lens system 251,252,253 in FIG. 3.

The optical path length modulator 23 is comprised of the spectrum device 231, the cylindrical lens 232, the cylindrical lens 234,234 and the phase shift mirror 233 as shown in FIG. 4. The optical path length modulator 23 receives white light WL from the white light source 21 through the beam splitter 221 and the lens system (cylindrical lens 251). And the optical path length modulator 23 generates light frequency comb CMB _ R which is separated spatially depending on frequency.

The spectrum device 231 is VIPA same as the first embodiment. The spectrum device 231 can generate teeth (CMB) of the different frequency. These teeth (CMB) are separated spatially depending on frequency. The constitution of phase shift mirror 233 is the same as constitution of the phase shift mirror 133 of the first embodiment.
Phase shift mirror 233 receives teeth CMB, and phase shift mirror 233 reflects it. The reflection distance of teeth CMB changes depending on frequency step by step. The light frequency comb CMB _ R which phase shifted depending on reflection distance is thereby generated. This light frequency comb CMB _ R is expanded in two-dimensional light frequency comb by the phase shift mirror 233, and the two-dimensional light frequency com is irradiated to the beam splitter 223.

On the other hand, white light WL from the white light source 21 is irradiated the measuring object 28 with through the beam splitter 221, the lens system 252 (cylindrical lens)and the beam splitter 222. And the reflected light (a scattered light) OB_R from the measuring object 28 is irradiated to the beam splitter 223 through the beam splitter 222 and the lens system 253 (cylindrical lens).

In FIG. 3, the measuring object 28 is carried to the moving stage 29, and it can biaxially move horizontally. The beam splitter 223 synthesizes reflected light OB_R from light frequency comb CMB_R and the measuring object 28 from the optical path length modulator 23, and the beam splitter 223 emits these to the interference profile measuring instrument 24 as synthesized light CMP. The interference profile measuring instrument 24 is a two-dimensional image sensor in the present embodiment. The interference profile measuring instrument 24 receives synthesized light CMP, and the interference profile p (x) is measured.

FIG. 5 is explanatory drawing of the third embodiment of the interferometer of the present invention. The optical path length modulator 13 having a spectrum device was used in the interferometer (Mach-Zehnder type) of FIG. 1. However, as for the optical path length modulator 33, a spectrum device is not used in the present embodiment. The interferometer of FIG. 5 can acquire space informations (the one-dimensional distance to the surface point or the one-dimensional coaxial tomography of the depth direction) of the measuring object 28 like interferometer 1 of the first embodiment. The interferometer of FIG. 5 can acquire properties (energy structural information, index of refraction, transmissivity, reflectivity) of measuring object 38 in each depth.

The interferometer 3 includes the white light source 31, the beam splitter 321,322,323, the optical path length modulator 33, the photodetector 34 and the lens system 352,353,354 in FIG. 5.

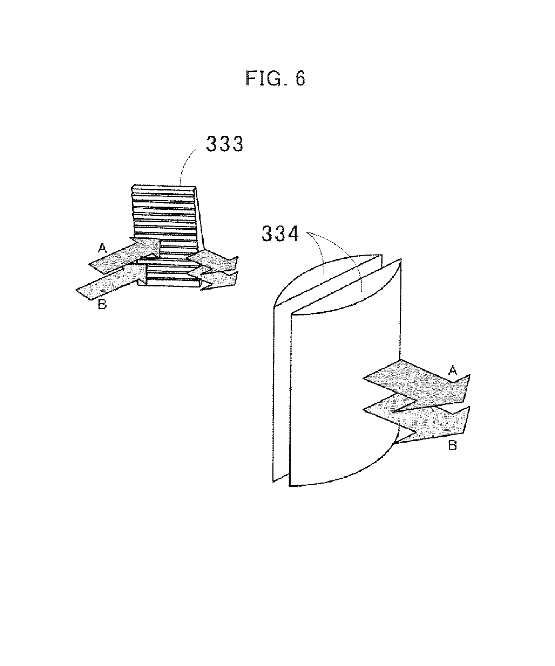

The optical path length modulator 33 is comprised of the modulation mirror 333 and two cylindrical lens 334, 334 as shown in FIG. 6. The optical path length modulator 33 receives broadband light (here white light) from the white light source 31 through the beam splitter 321, and the broadband light received is performed phase modulating of by modulation mirror 333 (cf. FIG. 6).

The modulation mirror 333 is the mirror which the stairs were formed( the same as a mirror used in first embodiment and second embodiment). Modulation mirror 333 receives white light WL. The modulation mirror 333 can reflect back the light WL that reflection distance changed step by step. Optical path length of the white light WL changes as indicated in A of FIG. 6 and B.

On the other hand, white light WL from the white light source 31 is irradiated the measuring object 38 through the beam splitter 321, the lens system 352 (a cylindrical lens) and the beam splitter 322. And the reflected light (a scattered light) from the measuring object 38 is irradiated the beam splitter 323 with through the beam splitter 322, the lens system 353 (a cylindrical lens) and the lens system 354 (cylindrical lens).

In FIG. 5, the measuring object 38 is carried to the moving stage 39, the measuring object 38 can move with the flexibility of 1-axis or the flexibility of 2-axes horizontally. The beam splitter 323 synthesizes reflected light of the modulation mirror 333 and reflected light of the measuring object 38. The synthetic light is emitted to the photo detector 34. The photo detector 34 is one dimension image sensor in this constitution example.

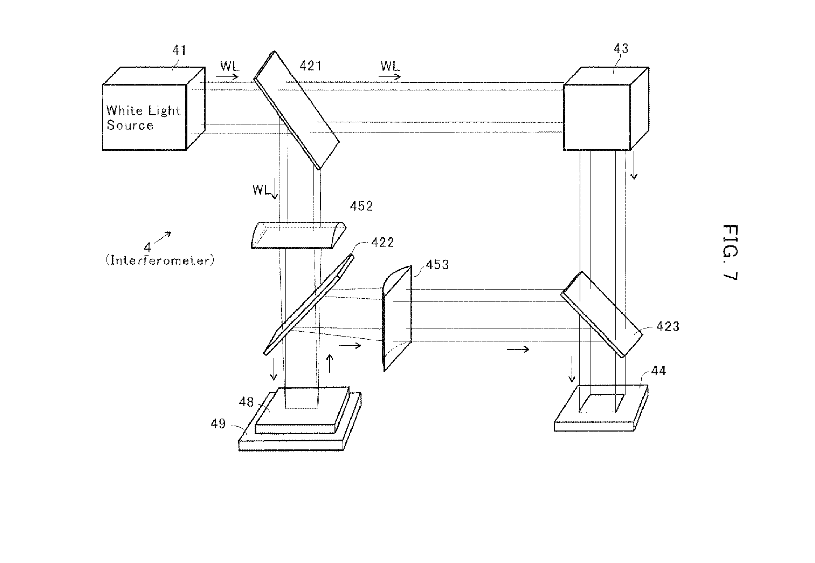

FIG. 7 is explanatory drawing of the fourth embodiment of the interferometer of the present invention. In the interferometer (Mach-Zehnder type) of FIG. 3, the distance to the surface point and the one dimension coaxial tomography of the depth direction were measured by the optical path length modulator 23 using the spectrum device. In this embodiment, a spectrum device is not used for the optical path length modulator 43. The interferometer of FIG. 7 can acquire space information (the two-dimensional distance to the surface point and the two-dimensional coaxial tomography of the depth direction) of the measuring object 48 like the interferometer 2 of the second embodiment.

The interferometer 4 comprises the white light source 41, the beam splitter 421,422,423, the optical path length modulator 43, the photo detector 44 and the lens system 452,453 in FIG. 7. The optical path length modulator 43 is the same as the optical path length modulator 33 shown in FIG. 5.

The modulation mirror of the constitution same as the modulation mirror 133 of the first embodiment receives the white light WL from the white light source 41 through the beam splitter 421. The modulation mirror changes the reflection distance step by step, and white light WL is reflected. The phase of the white light WL which received is shifted depending on reflection distance thereby.

On the other hand, the white light WL from the white light source 41 is irradiated the measuring object 48 with through the beam splitter 421, the lens system 452 (cylindrical lens) and the beam splitter 422. And the reflected light (a scattered light) of measuring object 48 is reflected by the beam splitter 423 through the beam splitter 422 and lens system 453 (cylindrical lens).

In FIG. 7, the measuring object 48 is mounted to the moving stage 49, and it can biaxially move horizontally. The beam splitter 423 synthesizes the light from the optical path length modulator 43 and the reflected light (the reflected light from the beam splitter 423) from the measuring object 48. The composition light is emitted to the photo detector 44. The photo detector 44 is the two-dimensional image sensor in the present embodiment.

FIG. 8 is explanatory drawing of the fifth embodiment of the interferometers of the present invention. By using the interferometer (a Michelson type) of FIG. 8, the distance to the surface point and the one-dimensional coaxial tomography of the depth direction can be measured.

In FIG. 8, the interferometer 5 comprises the white light source 51, the beam splitter 52, the optical path length modulator 53, the interference profile measuring instrument 54 and the lens system 551,552,553,554. Even the present embodiment can use the light source which can produce broadband light replacing with the white light source 51 like the first embodiment and the second embodiment. The optical path length modulator 53 receives white light WL that the white light source 51 generated through the beam splitter 52, the lens system 551 (cylindrical lens), and light frequency comb (CMB_R) is emitted. The optical path length modulator 53 is comprised of the first optical device 531, the cylindrical lens 532 and the phase shift mirror 533.
The optical device 531 is VIPA, and the modes of the different frequency are separated spatially, and these can be generated for the first.

The phase shift mirror 533 is a mirror constructed in the shape of stairs. The phase shift mirror 533 receives light frequency comb CMB (teeth), and generates light frequency comb CMB_R which the phase shifted depending on reflection distance. The reflection distance of the phase shift mirror 533 changes depending on frequency of the light frequency comb CMB(teeth) step by step.
In this embodiment, the phase shift mirror 533 emits reflected light (light frequency comb CMB_R) in a reverse path to the first spectrum device 531. The first spectrum device 531 receives light frequency comb CMB_R through the phase shift mirror 533. The light frequency comb CMB_R is returned to white light WL_P, and it is entered the beam splitter 55.

On the other hand, the white light WL from the white light source 51 transmits beam splitter 52, and it is irradiated the measuring object 58 by lens system 552 (cylindrical). And the reflected light OB_R of the measuring object 58 is reflected by the beam splitter 52 through the lens system 552.

The beam splitter 52 synthesizes light (white light WL_P returning with the first spectrum device 531) from the optical path length modulator 53 and reflected light OB_R from the measuring object 58, and the beam splitter 52 emits synthesized light CMP.

The second spectrum device 56 and the first spectrum device 531 have the same characteristic. The second spectrum device 56 generates light frequency comb CMB 'from synthesized light CMP. The interference profile measuring instrument 54 is a two-dimensional image sensor in the present embodiment. The interference profile measuring instrument 54 receives light frequency comb CMB', and interference profile p (x) is measured. Note that, in FIG. 8, the measuring object 58 is carried to the moving stage 59, and it can move on an one-dimensional plane or a two-dimensional plane.

FIG. 9 is explanatory drawing of the sixth embodiment of the interferometers of the present invention. The interferometer of the present invention can perform line measurement ( the two-dimensional measurement) of distance in the depth direction In the interferometer (Michelson type) of FIG. 9, the two-dimensional coaxial tomography of the depth direction can be measured. The interferometer 6 includes the white light source 61,the beam splitter 62, the optical path length modulator 63, the interference profile measuring instrument 64 and the lens system 651,652,653,654,655 in FIG. 9.

In this embodiment, like the first embodiment, the second embodiment or the thierd embodiment, a light source producing a broadband light can be used replacing with the white light source 61. The optical path length modulator 63 receives white light WL from the white light source 61 through the beam splitter 62 and the lens system 651 (cylindrical lens), and emits light frequency comb CMB_R. The optical path length modulator 63 is comprised of the first spectrum device 631, the cylindrical lens 632 and the phase shift mirror 633. The first spectrum device 631 is VIPA, and modes(teeth of comb CMB)of the different frequency separated spatially are generated by spatial separation.

The phase shift mirror 633 is a mirror constructed in the shape of stairs. The phase shift mirror 633 receives light frequency comb CMB, and the light frequency comb CMB is reflected. The reflection distance of the phase shift mirror 633 changes depending on frequency of the light frequency comb CMB step by step. The light frequency comb CMB _ R which phase shifted depending on reflection distance is thereby generated. In this embodiment, the phase shift mirror 633 is located so that reflected light frequency comb CMB _ R faces the first spectrum device 631. The light frequency comb CMB _ R from phase shift mirror 633 is entered the first spectrum device 631. Light frequency comb CMB _ R is changed back into white light, and the white light is entered into the beam splitter 62 as WL_P.

On the other hand, the white light WL from the white light source 61 transmits the beam splitter 62, and it is irradiated the measuring object 68 by the lens system 652 (cylindrical). And the reflected light (a scattered light) OB_R of the measuring object 68 is reflected by the beam splitter 62 through the lens system 652.

Beam splitter 62 synthesizes white light WL _ P (white light WL _ P returning with the first spectrum device 631) and reflected light OB_R. The white light is emitted from the optical path length modulator 63, and the reflected light OB_R is emitted from the measuring object 68. The synthesized light is entered to the second spectrum device 66 through the lens system 653 (cylindrical lens).

The second spectrum device 66 has a characteristic same as first spectrum device 631. The second spectrum device 66 generates light frequency comb CMB 'from synthesized light CMP. The interference profile measuring instrument 64 is two-dimensional image sensor in the present embodiment. The interference profile measuring instrument 64 receives light frequency comb CMB' through the lens system 654, 655 (cylindrical lens), and interference profile p (x) is measured.

Note that, in FIG. 9, the measuring object 68 is carried to the moving stage 69, and it can move the one-dimensional plane or two-dimensional plane.

FIG. 10 is an illustration of the seventh embodiment of the interferometers of the present invention. In the interferometer (a Michelson type) of FIG. 8, the optical path length modulator 53 having the first spectrum device 531 was used. In this embodiment, any spectrum device is not used for the optical path length modulator 53. The interferometer of FIG. 10 can acquire the distance from the reference point to the surface point or the one dimension coaxial tomography of the depth direction about measuring object 78 like interferometer 5 of the fifth embodiment. The interferometer of FIG. 10 can acquire property (energy structural information, index of refraction, transmissivity, reflectivity) of the measuring object 78 in each depth.

The interferometer 7 includes the white light source 71, the beam splitter 7 and the modulator 73 and lens system, 752, 753 in FIG. 10. The modulation mirror 733 receives the white light from the white light source 71 through the beam splitter 72, and the modulation mirror 733 emits the white light.

The modulation mirror 733 is a mirror constructed in the shape of stairs. Modulation mirror 733 receives white light, and reflects the white light that reflection distance changes step by step. In this configuration example, the modulation mirror 733 is placed so that reflected light is emitted in a reverse path. The reflected light emitted from modulation mirror 733 entered into the beam splitter 75.

On the other hand, the white light from the white light source 71 transmits the beam splitter 72, and the white light is irradiated to measuring object 78 through lens system 752 (cylindrical). And the reflected light from the measuring object 78 is entered into the beam splitter 72.

The beam splitter 72 synthesizes light from the modulation mirror 733 and the reflected light from measuring object 78, and emits the synthesized light.

The photo detector 74 is the two-dimensional image sensor in the present embodiment. Note that, in FIG. 10, the measuring object 78 is placed to moving stage 79, and it can move an one-dimensional plane or a two-dimensional plane.

FIG. 11 is an explanatory drawing of the eighth embodiment of the interferometers of the present invention. In the interferometer (Michelson type) of FIG. 9, the distance to the surface point and the two-dimensional coaxial tomography of the depth direction were measured using the light path length modulator 63 with the spectrum device 631. In this embodiment, the spectrum device is not used as the optical path length modulator 63. The interferometer of FIG. 11 can measure the distance to the surface point of measuring object 89 or the one dimension coaxial tomography of the depth direction same as interferometer 6 of the sixth embodiment. Also, the interferometer of FIG. 11 can acquire properties (energy structural information, index of refraction, transmissivity, reflectivity) of the measuring object 89 in each depth.

In FIG. 11, the interferometer 8 includes the white light source 81, the beam splitter 88, the modulation mirror 833, the photo detector 84 and the lens system 852.

The modulation mirror 833 receives through the beam splitter 82 in white light from the white light source 81. The modulation mirror 833 emits light shifted at time. The modulation mirror 833 is a mirror constructed in the shape of stairs. This modulation mirror 833 can generate the light that shifted depending on reflection distance at time. In this embodiment, the modulation mirror 833 is placed to emit in a reverse path. The reflected light from the modulation mirror 833 is entered into the beam splitter 42.

On the other hand, the white light from white light source 81 transmits beam splitter 82, and it is entered into the measuring object O through lens system 852 (cylindrical). And the reflected light (a scattered light) of measuring object O is reflected by the beam splitter 82 through lens system 852.

Beam splitter 82 synthesizes reflected light of outgoing beam of modulation mirror 833 and measuring object O. The synthesized light is entered into the photo detector 84 through lens system 853 (cylindrical lens), 854, 855.

Photo detector 84 is a two-dimensional image sensor in the present embodiment.

Note that, in FIG. 11, the measuring object 88 is placed to moving stage 89, and it can move the one-dimensional or two-dimensional plane.

### DENOTATION OF REFERENCE NUMERALS

1, 2, 3, 4 interferometers
11, 21, 31, 41 white light sources
13, 23, 33, 43 optical path length modulators
14, 24, 34, 44 interference profile measuring instruments
18, 28, 38, 48 measuring object
19, 29, 39, 49 moving stage
36, 46 the second
32, 35, 42, 121, 122, 123, 221, 222, 223 beam splitter
151, 152, 153, 154, 251, 252, 253, 351, 352, 353, 451, 452, 453, 454 lens system
131, 231 minutes optical device
132, 232, 234, 332, 432 cylindrical lens
133, 233, 333, 433 phase shift mirrors
331, 431 first spectrum device

## Claims

1. Interferometer comprises,
a light source generating a broadband light,
a light path length modulator generating the modulated light that optical path length changes depending on a one-dimensional position on cross-section which is perpendicular to the propagation direction,
an optical system which emits to a measuring object broadband light generated by the light source and generates the reflected light, and,
an one-dimensional photo detector which receives the modulated light and the reflected light.

2. An interferometer according to claim 1, wherein the optical path length modulator is comprised so that reflection distance changes step by step depending on a one-dimensional position on the beam cross-section, and the above light path length changes,

3. An interferometer according to claim 2, further comprising,
a spectrum device which receive broadband light and generates a light frequency comb,
a phase shift mirror which changes the light path length of the light frequency comb depending on the depth of the step because the surface is constructed like stairs.

4. Interferometer comprises,
a light source generating a broadband light,
a light path length modulator generating the modulated light that optical path length changes depending on a one-dimensional position on cross-section which is perpendicular to the propagation direction,
an optical system which emits to a measuring object broadband light generated by the light source and generates the reflected light, and,
an two-dimensional photo detector which receives the modulated light and the reflected light.

5. An interferometer according to claim 4, wherein the optical path length modulator is comprised so that reflection distance changes step by step depending on a one-dimensional position on the beam cross-section, and the above light path length changes,

6. An interferometer according to claim 5, further comprising a spectrum device which receive broadband light and generates a light frequency comb,
a phase shift mirror which changes the light path length of the light frequency comb depending on the depth of the step because the surface is constructed like stairs.
